# EUROPEAN PATENT APPLICATION

(11) **EP 3 905 815 A1**
(43) Date of publication of application: **03.11.2021**
(21) Application number: 19913179.8
(22) Date of filing: 30.12.2019
(51) Int. Cl.: H04W 72/04

(54) **COMMUNICATION METHOD AND COMMUNICATION DEVICE**

(30) Priority: 28.01.2019 CN 201910080414
(71) Applicant: Huawei Technologies Co., Ltd., Longgang District, Shenzhen, Guangdong 518129, (CN)
(72) Inventor: MA, Ruixiang, Shenzhen, Guangdong 518129 (CN); GUAN, Lei, Shenzhen, Guangdong 518129 (CN); LI, Yuan, Shenzhen, Guangdong 518129 (CN)
(74) Representative: Isarpatent
(86) International application number: PCT/CN2019/129992
(87) International publication number: WO 2020/156002

(57) **Abstract**

This application provides a communication method and a communication apparatus. A terminal device receives indication information sent by a network device by using higher layer signaling, receives, based on the indication information, a downlink data channel that is sent by the network device and that carries control information, and sends an uplink channel to the network device based on the control information. In this process, a step in which the network device sends a downlink PDCCH to the terminal device and a step in which the network device sends an uplink PDCCH to the terminal device are omitted, and closed-loop service communication is implemented through only one downlink data channel and one uplink channel. There are few signaling-related steps, thereby greatly ensuring service reliability and reducing a latency.

## Description

This application claims priority to Chinese Patent Application No. 2019100804142, filed with the Chinese Patent Office on January 28, 2019 and entitled "COMMUNICATION METHOD AND COMMUNICATION APPARATUS", which is incorporated herein by reference in its entirety.

### TECHNICAL FIELD

Embodiments of this application relate to the field of mobile communication technologies, and in particular, to a communication method and a communication apparatus.

### BACKGROUND

Currently, in a communication process, before uplink and downlink data is transmitted between a network device and a terminal device, the network device needs to send a physical downlink control channel (physical downlink control channel, PDCCH) to the terminal device.

In a downlink data transmission process, a network device sends a PDCCH to a terminal device. The PDCCH is used to indicate information related to a physical downlink shared channel (physical downlink shared channel, PDSCH), such as carrier indicator information (carrier indicator information), frequency domain resource indication information, and time domain resource indication information. The PDCCH may further include information related to a physical uplink control channel (physical uplink control channel, PUCCH) on which feedback information corresponding to the PDSCH is located, such as timing indication information indicating an interval between a time point at which the PDSCH is sent and a time point at which the feedback information corresponding to the PDSCH is fed back. The timing indication information is used to indicate a quantity of slots (slot) within an interval between a time point at which the terminal device receives the PDSCH and a time point at which the terminal device sends the corresponding PUCCH. For example, if the terminal device sends the PDSCH to the network device in an n^{th} slot, and the timing indication information is K1 slots, the terminal device sends the PUCCH to the network device in an (n+K1)^{th} slot. After receiving the PDCCH, the terminal device sends the PDSCH to the network device based on the PDCCH. The PDCCH further includes the information related to the PUCCH, and the terminal device further sends the PUCCH to the network device based on the PDCCH.

In an uplink data transmission process, a network device sends a PDCCH to a terminal device. The PDCCH is used to indicate information related to a physical uplink shared channel (physical uplink shared channel, PUSCH), for example, carrier indicator information, frequency domain resource indication information, time domain resource indication information, and a frequency-domain frequency hopping (frequency hopping) indication. The time domain resource indication information is used to indicate a K2 indicator value, and the K2 indicator value indicates a quantity of slots within an interval between a time point at which the PDCCH is received and a time point at which the PUSCH is sent. After receiving the PDCCH in an n^{th} slot, the terminal device sends the PUSCH to the network device in an (n+K2)^{th} slot based on the PDCCH.

Ultra-reliable low-latency communication (ultra-reliable and low-latency communication, URLLC) requires 99.999% or even higher data transmission reliability, a transmission latency less than 1 ms, signaling overheads as low as possible, and implementation of closed-loop service communication. The closed-loop service communication means that both uplink data and downlink data exist in a communication process. If the foregoing uplink and downlink data transmission manners are used, the terminal device needs to receive two PDCCHs, where one PDCCH is used to schedule the PDSCH, and the other PDCCH is used to schedule the PUSCH. In this process, a plurality of signaling-related steps are required, for example, signaling-related steps from the PDCCH to the PDSCH and from the PDCCH to the PUSCH. If an error occurs in one of the signaling-related steps, the overall service reliability cannot be ensured.

### SUMMARY

This application provides a communication method and a communication apparatus, to ensure service reliability in closed-loop service communication by reducing signaling-related steps in a communication process.

According to a first aspect, an embodiment of this application provides a communication method. The method may be applied to a terminal device, or may be applied to a chip in a terminal device. The following describes the method by using an example in which the method is applied to the terminal device. The method includes: The terminal device receives indication information sent by a network device by using higher layer signaling; receives, based on the indication information, a downlink data channel sent by the network device, where the downlink data channel carries control information; and sends an uplink channel to the network device based on the control information. In this solution, a step in which the network device sends a downlink PDCCH to the terminal device and a step in which the network device sends an uplink PDCCH to the terminal device are omitted, and closed-loop service communication is implemented through only one downlink data channel and one uplink channel. There are few signaling-related steps, thereby greatly ensuring service reliability and reducing a latency. In addition, the terminal device receives a downlink data signal without depending on the PDCCH sent by the network device, but receives the downlink data channel based on the indication information in the higher layer signaling. Therefore, PDCCH overheads are reduced, and PDCCH blocking that occurs when a plurality of terminal devices transmit services at a same moment is avoided. The terminal device sends the uplink channel to the network device without depending on the PDCCH, but sends the uplink channel, for example, an uplink data channel or an uplink control channel, to the network device based on the control information on the received downlink data channel, thereby further reducing the PDCCH overheads. It should be specially noted that, the downlink data channel includes the control information, and the network device may jointly encode the control information and other data information on the downlink data channel, so that a problem in which an additional cyclic redundancy check is added when the PDCCH is separately sent is resolved. Therefore, the overheads are reduced.

In a feasible design, the uplink channel includes an uplink control channel, and the control information includes at least one of the following: transmit power control information of the uplink control channel, timing indication information of the uplink control channel, resource indication information of the uplink control channel, a zero power channel state information-reference signal trigger, or a first downlink assignment index DAI, where the timing indication information is used to indicate a time interval between a time point at which the terminal device receives the downlink data channel and a time point at which the terminal device sends the uplink control channel. In this solution, the network device sends the control information required by the uplink control channel to the terminal device through the downlink data channel, so that after receiving the downlink data channel, the terminal device parses out the control information from the downlink data channel and sends the uplink control channel. Sending of the uplink control channel does not depend on the PDCCH, thereby reducing the PDCCH overheads to some extent.

In a feasible design, the uplink channel includes an uplink data channel, and the control information includes at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI. In this solution, the network device sends the control information required by the uplink data channel to the terminal device through the downlink data channel, so that after receiving the downlink data channel, the terminal device parses out the control information from the downlink data channel and sends the uplink data channel. Sending of the uplink control channel does not depend on the PDCCH, thereby reducing the PDCCH overheads to some extent.

In a feasible design, before the sending, by the terminal device, an uplink channel to the network device based on the control information, the method further includes: The terminal device does not receive a physical downlink control channel. In this solution, the network device does not send, to the terminal device, the PDCCH used to schedule the downlink data channel, and the terminal device receives the downlink data channel only based on the indication information sent by the network device by using the higher layer signaling. In other words, various information required by the terminal device to receive the downlink data channel is carried in the indication information, and the network device does not need to send the PDCCH to the terminal device, thereby reducing the PDCCH overheads to some extent.

In a feasible design, the indication information includes at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel. In this solution, the network device sends the indication information required by the downlink data channel to the terminal device by using the higher layer signaling, so that after receiving the higher layer signaling, the terminal device parses out the indication information from the higher layer signaling and receives the downlink data channel. Receiving of the downlink data channel does not depend on the PDCCH, thereby reducing the PDCCH overheads to some extent.

In a feasible design, before the receiving, by the terminal device based on the indication information, a downlink data channel sent by the network device, the method further includes: The terminal device receives a semi-persistent scheduling physical downlink control channel sent by the network device; and the receiving, by the terminal device based on the indication information, a downlink data channel sent by the network device includes: The terminal device receives, based on the semi-persistent scheduling physical downlink control channel and the indication information, the downlink data channel sent by the network device. In this solution, the network device sends the semi-persistent scheduling physical downlink control channel to the terminal device, and sends the indication information to the terminal device by using the higher layer signaling. In this way, some information required by the terminal device to receive the downlink data channel is carried in the indication information, and the other information is carried on the semi-persistent scheduling physical downlink control channel. The PDCCH sent by the network device is the semi-persistent scheduling physical downlink control channel. After the semi-persistent scheduling PDCCH is sent only once, in a subsequent period of time, the downlink data channel may be received based on indication information of the PDCCH, and the PDCCH does not need to be received each time before the downlink data channel is received. Therefore, the PDCCH overheads are reduced to some extent.

In a feasible design, the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and the indication information includes at least one of the following information: a transmission periodicity of the downlink data channel, a quantity of hybrid automatic repeat request HARQ processes of the downlink data channel, or a format of a physical uplink control channel PUCCH resource corresponding to the downlink data channel. In this solution, the network device sends the semi-persistent scheduling physical downlink control channel to the terminal device, and sends the indication information to the terminal device by using the higher layer signaling. After the semi-persistent scheduling PDCCH is received only once, in a subsequent period of time, the downlink data channel may be received based on the semi-persistent scheduling PDCCH, and the PDCCH does not need to be received each time before the downlink data channel is received. Therefore, the PDCCH overheads are reduced, and PDCCH blocking that occurs when a plurality of terminal devices transmit services at a same moment is avoided. Further, the downlink data channel includes the control information, and the network device may jointly encode the control information and other data information on the downlink data channel, so that the problem in which an additional cyclic redundancy check (cyclic redundancy check, CRC) is added when the PDCCH is separately sent is resolved. Therefore, the overheads are reduced.

In a feasible design, the control information includes a hybrid automatic repeat request HARQ process number of the downlink data channel; or the indication information includes a hybrid automatic repeat request HARQ process number of the downlink data channel. In this solution, because the process number of the downlink data channel is not limited, the HARQ process number of the downlink data channel can be flexibly sent to the terminal device.

In a feasible design, before the receiving, by the terminal device based on the indication information, a downlink data channel sent by the network device, the method further includes: The terminal device detects a demodulation reference signal DMRS sent by the network device. In this solution, the terminal device determines, by detecting the DMRS, whether the network device sends the downlink data channel, and receives the downlink data channel by using the indication information after determining that the network device sends the downlink data channel. Compared with direct blind detection of existence of the downlink data channel, DMRS detection is sequence detection, so that implementation complexity of the terminal device can be reduced, and decoding can be performed without assuming existence of downlink data, thereby reducing a latency.

According to a second aspect, an embodiment of this application provides a communication method. The method may be applied to a network device, or may be applied to a chip in a network device. The following describes the method by using an example in which the method is applied to the network device. The method includes: The network device sends indication information to a terminal device by using higher layer signaling; sends, to the terminal device, a downlink data channel that carries control information; and receives an uplink channel, where the uplink channel is sent by the terminal device based on the control information. In this solution, a step in which the network device sends a downlink PDCCH to the terminal device and a step in which the network device sends an uplink PDCCH to the terminal device are omitted, and closed-loop service communication is implemented through only one downlink data channel and one uplink channel. There are few signaling-related steps, thereby greatly ensuring service reliability and reducing a latency.

In a feasible design, the uplink channel includes an uplink control channel, and the control information includes at least one of the following: transmit power control information of the uplink control channel, timing indication information of the uplink control channel, resource indication information of the uplink control channel, a zero power channel state information-reference signal trigger, or a first downlink assignment index DAI, where the timing indication information is used to indicate a time interval between a time point at which the terminal device receives the downlink data channel and a time point at which the terminal device sends the uplink control channel. In this solution, the network device sends the control information required by the uplink control channel to the terminal device through the downlink data channel, so that after receiving the downlink data channel, the terminal device parses out the control information from the downlink data channel and sends the uplink control channel. Sending of the uplink control channel does not depend on the PDCCH, thereby reducing PDCCH overheads to some extent.

In a feasible design, the uplink channel includes an uplink data channel, and the control information includes at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI. In this solution, the network device sends the control information required by the uplink data channel to the terminal device through the downlink data channel, so that after receiving the downlink data channel, the terminal device parses out the control information from the downlink data channel and sends the uplink data channel. Sending of the uplink control channel does not depend on the PDCCH, thereby reducing the PDCCH overheads to some extent.

In a feasible design, before the sending, by the network device to the terminal device, a downlink data channel that carries control information, the method further includes: The network device does not send a physical downlink control channel to the terminal device. In this solution, the network device sends the indication information required by the downlink data channel to the terminal device by using the higher layer signaling, so that after receiving the higher layer signaling, the terminal device parses out the indication information from the higher layer signaling and receives the downlink data channel. Receiving of the downlink data channel does not depend on the PDCCH, thereby reducing the PDCCH overheads to some extent.

In a feasible design, the indication information includes at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel. In this solution, the network device sends the indication information required by the downlink data channel to the terminal device by using the higher layer signaling, so that after receiving the higher layer signaling, the terminal device parses out the indication information from the higher layer signaling and receives the downlink data channel. Receiving of the downlink data channel does not depend on the PDCCH, thereby reducing the PDCCH overheads to some extent.

In a feasible design, before the receiving, by the network device, an uplink channel sent by the terminal device based on the control information, the method further includes: The network device sends a semi-persistent scheduling physical downlink control channel to the terminal device. In this solution, the network device sends the semi-persistent scheduling physical downlink control channel to the terminal device, and sends the indication information to the terminal device by using the higher layer signaling. After the semi-persistent scheduling PDCCH is received only once, in a subsequent period of time, the downlink data channel may be received based on the SPS PDCCH, and the PDCCH does not need to be received each time before the downlink data channel is received. Therefore, the PDCCH overheads are reduced, and PDCCH blocking that occurs when a plurality of terminal devices transmit services at a same moment is avoided. Further, the downlink data channel includes the control information, and the network device may jointly encode the control information and other data information on the downlink data channel, so that a problem in which an additional cyclic redundancy check (cyclic redundancy check, CRC) is added when the PDCCH is separately sent is resolved. Therefore, the overheads are reduced.

In a feasible design, the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and the indication information includes at least one of the following information: a transmission periodicity of the downlink data channel, a quantity of hybrid automatic repeat request HARQ processes of the downlink data channel, or a format of a physical uplink control channel PUCCH resource corresponding to the downlink data channel. In this solution, the network device sends the semi-persistent scheduling physical downlink control channel to the terminal device, and sends the indication information to the terminal device by using the higher layer signaling. After the semi-persistent scheduling PDCCH is received only once, in a subsequent period of time, the downlink data channel may be received based on the SPS PDCCH, and the PDCCH does not need to be received each time before the downlink data channel is received. Therefore, the PDCCH overheads are reduced, and PDCCH blocking that occurs when a plurality of terminal devices transmit services at a same moment is avoided. Further, the downlink data channel includes the control information, and the network device may jointly encode the control information and other data information on the downlink data channel, so that the problem in which an additional cyclic redundancy check (cyclic redundancy check, CRC) is added when the PDCCH is separately sent is resolved. Therefore, the overheads are reduced.

In a feasible design, the control information includes a hybrid automatic repeat request HARQ process number of the downlink data channel; or the indication information includes a hybrid automatic repeat request HARQ process number of the downlink data channel. In this solution, because the process number of the downlink data channel is not limited, the HARQ process number of the downlink data channel can be flexibly sent to the terminal device.

In a feasible design, before the sending, by the network device to the terminal device, a downlink data channel that carries control information, the method further includes: The network device sends a demodulation reference signal DMRS to the terminal device. In this solution, the terminal device determines, by detecting the DMRS, whether the network device sends the downlink data channel, and receives the downlink data channel by using the indication information after determining that the network device sends the downlink data channel. Compared with direct blind detection of existence of the downlink data channel, DMRS detection is sequence detection, so that implementation complexity of the terminal device can be reduced, and decoding can be performed without assuming existence of downlink data, thereby reducing a latency.

According to a third aspect, an embodiment of this application provides a communication apparatus. The communication apparatus has a function of implementing behaviors of the terminal device in the foregoing method embodiment. The function may be implemented by hardware, or may be implemented by hardware executing corresponding software. The hardware or the software includes one or more modules corresponding to the foregoing function. The module may be software and/or hardware.

In a possible design, a structure of the communication apparatus includes a processor and a transceiver. The processor is configured to: control the transceiver to receive indication information sent by a network device by using higher layer signaling; receive, based on the indication information, a downlink data channel sent by the network device, where the downlink data channel carries control information; and send an uplink channel to the network device based on the control information.

According to a fourth aspect, an embodiment of this application provides a communication apparatus. The communication apparatus is configured to implement a function of behaviors of the network device in the foregoing method embodiments. The function may be implemented by hardware, or may be implemented by hardware executing corresponding software. The hardware or the software includes one or more modules corresponding to the foregoing function.

In a possible design, a structure of the communication apparatus includes a processor and a transceiver. The processor is configured to: control the transceiver to send indication information to a terminal device by using higher layer signaling; send, to the terminal device, a downlink data channel that carries control information; and receive an uplink channel, where the uplink channel is sent by the terminal device based on the control information.

According to a fifth aspect, an embodiment of this application provides a computer program product including instructions. When the computer program product runs on a terminal device, a computer of the terminal device is enabled to perform the method in the first aspect or the possible implementations of the first aspect.

According to a sixth aspect, an embodiment of this application provides a computer program product including instructions. When the computer program product runs on a network device, the network device is enabled to perform the method in the second aspect or the possible implementations of the second aspect.

According to a seventh aspect, an embodiment of this application provides a computer-readable storage medium. The computer-readable storage medium stores instructions. When the instructions are run on a terminal device, the terminal device is enabled to perform the method in the first aspect or the possible implementations of the first aspect.

According to an eighth aspect, an embodiment of this application provides a computer-readable storage medium. The computer-readable storage medium stores instructions. When the instructions are run on a network device, the network device is enabled to perform the method in the second aspect or the possible implementations of the second aspect.

According to a ninth aspect, an embodiment of this application provides a chip system. The chip system includes a processor, and may further include a memory, to implement a function of the network device or the terminal device in the foregoing method. The chip system may include a chip, or may include a chip and another discrete component.

According to the communication method and the communication apparatus provided in the embodiments of this application, the terminal device receives the indication information sent by the network device by using the higher layer signaling, receives, based on the indication information, the downlink data channel that is sent by the network device and that carries the control information, and sends the uplink channel to the network device based on the control information. In this process, the step in which the network device sends the downlink PDCCH to the terminal device and the step in which the network device sends the uplink PDCCH to the terminal device are omitted, and the closed-loop service communication is implemented through only one downlink data channel and one uplink channel. There are few signaling-related steps, thereby greatly ensuring the service reliability and reducing the latency. In addition, the terminal device receives the downlink data signal without depending on the PDCCH sent by the network device, but receives the downlink data channel based on the indication information in the higher layer signaling. Therefore, the PDCCH overheads are reduced, and PDCCH blocking that occurs when a plurality of terminal devices transmit services at a same moment is avoided. The terminal device sends the uplink channel to the network device without depending on the PDCCH, but sends the uplink channel, for example, the uplink data channel or the uplink control channel, to the network device based on the control information on the received downlink data channel, thereby further reducing the PDCCH overheads. It should be specially noted that, the downlink data channel includes the control information, and the network device may jointly encode the control information and the other data information on the downlink data channel, so that the problem in which the additional cyclic redundancy check is added when the PDCCH is separately sent is resolved. Therefore, the overheads are reduced.

### BRIEF DESCRIPTION OF DRAWINGS

FIG. 1 is a schematic diagram of closed-loop service communication;
FIG. 2 is a schematic diagram of a scenario to which a communication method according to an embodiment of this application is applicable;
FIG. 3 is a flowchart of a communication method according to an embodiment of this application;
FIG. 4 is another flowchart of a communication method according to an embodiment of this application;
FIG. 5 is a schematic diagram of a structure of a communication apparatus according to an embodiment of this application;
FIG. 6 is another schematic diagram of a structure of a communication apparatus according to an embodiment of this application;
FIG. 7 is a schematic diagram of a structure of a communication apparatus according to an embodiment of this application; and
FIG. 8 is a schematic diagram of a structure of a communication apparatus according to an embodiment of this application.

### DESCRIPTION OF EMBODIMENTS

Compared with previous generations of mobile communication systems, a 5th generation (the 5th generation, 5G) mobile communication system imposes higher requirements on a transmission rate, a latency, power consumption, and the like. The international telecommunication union (International Telecommunication Union, ITU) defines enhanced mobile broadband (Enhanced Mobile Broadband, eMBB), massive machine-type communication (Massive Machine-type Communication, mMTC), and ultra-reliable low-latency communication (Ultra-Reliable and Low-Latency Communication, URLLC) as three typical services of future 5G, which points out a direction for formulating 5G standards. As one of the three typical services of 5G, the URLLC is mainly used in application scenarios such as unmanned driving and telemedicine. These application scenarios impose higher requirements on reliability and a latency. Specific requirements of the URLLC service include: 99.999% data transmission reliability, a transmission latency less than 1 ms, and signaling overheads reduced as much as possible when requirements for high reliability and a low latency are satisfied.

Closed-loop communication services of controllers and sensors in a smart factory (smart factory) also belong to the URLLC service. In addition to requirements for a low latency and high reliability, the URLLC service has some other service requirements, for example, closed-loop communication and small-sized and medium-sized packet services. This type of service is an application-layer service and is represented as a data service over an air interface. In addition, this type of service is an uplink and downlink closed-loop service. Uplink and downlink closed-loop means that both uplink data and downlink data exist. The service may be a periodic service or an aperiodic service.

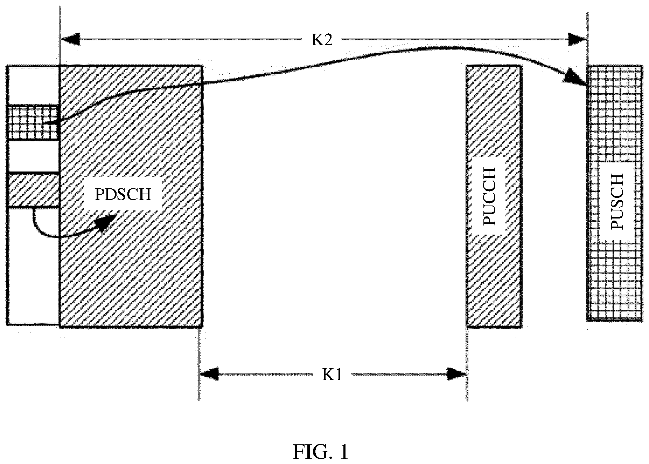

Generally, a network device sends, to a terminal device, scheduling information used to schedule downlink data, and the terminal device receives the downlink data based on the scheduling information. The network device sends, to the terminal device, scheduling information used to schedule uplink data, and the terminal device sends the uplink data based on the scheduling information. That is, the uplink data and the downlink data respectively correspond to different scheduling information. FIG. 1 is a schematic diagram of closed-loop service communication. Referring to FIG. 1, to implement a closed-loop service, a terminal device needs to receive two physical downlink control channels (physical downlink control channel, PDCCH). One PDCCH is used to schedule a physical downlink shared channel (physical downlink shared channel, PDSCH). After receiving the PDSCH, the terminal device sends a corresponding PUCCH after an interval of K1 slots, as shown by parts filled with slashes in FIG. 1. Another PDCCH is used to schedule a PUSCH. After receiving the PDCCH, the terminal device sends the corresponding PUSCH after an interval of K2 slots, as shown by parts filled with grids in FIG. 1. In this process, a plurality of signaling-related steps are required, for example, signaling-related steps from the PDCCH to the PDSCH and from the PDCCH to the PUSCH. To ensure overall service reliability, it needs to be ensured that an error probability of each step is very low. If an error probability of one step is relatively high, the overall service reliability cannot be ensured. In addition, to implement one time of complete service communication of one user, a network device needs to send two PDCCHs to the terminal device. Therefore, PDCCH signaling overheads are relatively high. If a plurality of terminal devices transmit services at a same time, PDCCH blocking may occur due to a limited quantity of PDCCHs (for example, the network device cannot simultaneously send the PDCCHs to the plurality of terminal devices, and consequently some terminal devices cannot receive a PDSCH or send a PUSCH because they do not receive the PDCCH). In addition, because there are a plurality of signaling-related steps, and demodulation and decoding are required in each signaling-related step, a latency is relatively high.

In view of this, embodiments of this application provide a communication method, to ensure service reliability, and reduce PDCCH overheads and a latency in closed-loop service communication by reducing signaling-related steps in a communication process.

In the specification, claims, and accompanying drawings of this application, the terms "first", "second", "third" and the like are intended to distinguish different objects but do not limit a particular sequence.

In the embodiments of this application, the word such as "example" or "for example" is used to give an example, an illustration, or a description. Any embodiment or design scheme described as an "example" or "for example" in the embodiments of this application should not be explained as being preferable or having more advantages than another embodiment or design scheme. Exactly, use of the word "example", "for example", or the like is intended to present a related concept in a specific manner.

The communication method provided in the embodiments of this application may be applied to a 3rd generation (the 3rd Generation, 3G) mobile communication system, a long term evolution (Long Term Evolution, LTE) system, a 4th generation (the 4th Generation, 4G) mobile communication system, a long term evolution-advanced (Long Term Evolution-Advanced, LTE-A) system, a cellular system related to the 3rd generation partnership project (3rd Generation Partnership Project, 3GPP), a 5th generation (the 5th Generation, 5G) mobile communication system, and a subsequent evolved mobile communication system.

A network device in the embodiments of this application may be an entity, for example, a next-generation NodeB (generation Node B, gNodeB) that is configured to transmit or receive a signal and that is on a network side. The network device may be a device configured to communicate with a mobile device. The network device may be an AP in a wireless local area network (wireless local area networks, WLAN), a base transceiver station (base transceiver station, BTS) in a global system for mobile communication (global system for mobile communication, GSM) or code division multiple access (code division multiple access, CDMA), a NodeB (NodeB, NB) in wideband code division multiple access (wideband code division multiple access, WCDMA), an evolved NodeB (evolutional Node B, eNB or eNodeB) in long term evolution (long term evolution, LTE), a relay station, an access point, a vehicle-mounted device, a wearable device, a network device in a future 5G network, a network device in a future evolved public land mobile network (public land mobile network, PLMN), a gNodeB in an NR system, or the like. In addition, in the embodiments of this application, the network device serves a cell, and a terminal device communicates with the network device by using a transmission resource (for example, a frequency domain resource, namely, a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells have characteristics of small coverage areas and low transmit power, and are applicable to providing a high-rate data transmission service. In addition, in another possible case, the network device may be another apparatus that provides a wireless communication function for the terminal device. A specific technology and a specific device form that are used by the network device are not limited in the embodiments of this application. For ease of description, in the embodiments of this application, the apparatus that provides the wireless communication function for the terminal device is referred to as the network device.

The terminal device in the embodiments of this application may be a wireless terminal device that can receive scheduling and indication information of the network device. The wireless terminal device may be a device that provides a user with voice and/or data connectivity, a handheld device with a wireless connection function, or another processing device connected to a wireless modem. The wireless terminal device may communicate with one or more core networks or the internet through a radio access network (radio access network, RAN). The wireless terminal device may be a mobile terminal device, such as a mobile phone (or referred to as a "cellular" phone and a mobile phone (mobile phone)), a computer, or a data card, for example, may be a portable, pocket-sized, handheld, computer built-in, or in-vehicle mobile apparatus that exchanges language and/or data with the radio access network. For example, the device may include a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), and a computer with a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal (remote terminal), an access terminal (access terminal), a user terminal (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like. Alternatively, the wireless terminal device may be a wearable device and a next-generation communication system, for example, a terminal device in a 5G network, a terminal device in a future evolved public land mobile network (public land mobile network, PLMN), a terminal device in an NR communication system, or the like.

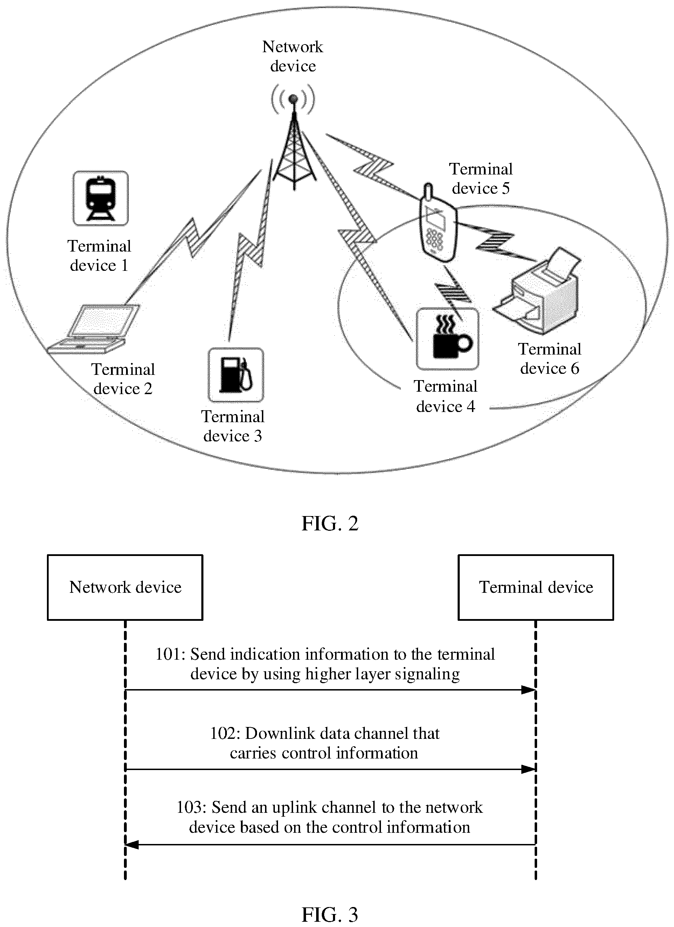

FIG. 2 is a schematic diagram of a scenario to which a communication method according to an embodiment of this application is applicable. Referring to FIG. 2, a network device and a terminal device 1 to a terminal device 6 form a communication system. In the communication system, any one of the terminal device 1 to the terminal device 6 receives indication information sent by the network device by using higher layer signaling, receives, based on the indication information, a downlink data channel sent by the network device, where the downlink data channel carries control information, and then sends an uplink channel to the network device based on the control information. In addition, the terminal device 4 to the terminal device 6 also form a communication system. In the communication system, the terminal device 4 to the terminal device 6 receives indication information sent by the network device by using higher layer signaling, receives, based on the indication information, a downlink data channel sent by the network device, where the downlink data channel carries control information, and then sends an uplink channel to the network device based on the control information.

The following describes in detail the communication method in this application based on the scenario shown in FIG. 2. For details, refer to FIG. 3. FIG. 3 is a flowchart of a communication method according to an embodiment of this application. In this embodiment, the communication method described in this application is described from a perspective of interaction between a network device and a terminal device. This embodiment includes the following steps.

101: The network device sends indication information to the terminal device by using higher layer signaling.

Correspondingly, the terminal device receives the indication information sent by the network device by using the higher layer signaling.

In the embodiments of this application, the higher layer signaling is signaling sent by a higher layer protocol layer. The higher layer protocol layer is at least one protocol layer above a physical layer. The higher layer protocol layer is, for example, a medium access control (Medium Access Control, MAC) layer, a radio link control (Radio Link Control, RLC) layer, a packet data convergence protocol (Packet Data Convergence Protocol, PDCP) layer, a radio resource control (radio resource control, RRC) layer, or a non-access stratum (non access stratum, NAS) layer.

For example, the network device may send the indication information to the terminal device by using the higher layer signaling, and the indication information includes information required by the terminal device to receive a downlink data channel. For example, the downlink data channel may be a PDSCH.

102: The network device sends, to the terminal device, the downlink data channel that carries control information.

Correspondingly, the terminal device receives, based on the indication information, the downlink data channel sent by the network device, where the downlink data channel carries the control information.

In this embodiment, the terminal device receives the downlink data channel sent by the network device without depending on a PDCCH each time, but receives the downlink data channel based on the indication information in the higher layer signaling. Therefore, PDCCH blocking that occurs when a plurality of terminal devices transmit services at a same moment is avoided. Further, the downlink data channel includes the control information, and the network device may jointly encode the control information and other data information on the downlink data channel. This resolves a problem of high overheads in a current technology because an additional cyclic redundancy check (cyclic redundancy check, CRC) needs to be added when the PDCCH is separately sent.

103: The terminal device sends an uplink channel to the network device based on the control information.

Correspondingly, the network device receives the uplink channel, where the uplink channel is sent by the terminal device based on the control information.

For example, the terminal device sends the uplink channel to the network device without depending on the PDCCH, but sends the uplink channel, for example, an uplink data channel or an uplink control channel, to the network device based on the control information on the received downlink data channel. In this way, when the terminal device needs to send uplink data, the network device does not need to send the PDCCH to the terminal device. Therefore, PDCCH overheads are reduced, and PDCCH blocking that occurs when a plurality of terminal devices transmit services at a same moment is avoided.

According to the communication method provided in this embodiment of this application, the terminal device receives the indication information sent by the network device by using higher layer signaling, receives, based on the indication information, the downlink data channel that is sent by the network device and that carries the control information, and sends the uplink channel to the network device based on the control information. In this process, a step in which the network device sends a downlink PDCCH to the terminal device and a step in which the network device sends an uplink PDCCH to the terminal device are omitted, and closed-loop service communication is implemented through only one downlink data channel and one uplink channel. There are few signaling-related steps, thereby greatly ensuring service reliability and reducing a latency. In addition, the terminal device receives a downlink data signal without depending on the PDCCH sent by the network device, but receives the downlink data channel based on the indication information in the higher layer signaling. Therefore, the PDCCH overheads are reduced, and PDCCH blocking that occurs when a plurality of terminal devices transmit services at a same moment is avoided. The terminal device sends the uplink channel to the network device without depending on the PDCCH, but sends the uplink channel, for example, an uplink data channel or an uplink control channel, to the network device based on the control information on the received downlink data channel, thereby further reducing the PDCCH overheads. It should be specially noted that, the downlink data channel includes the control information, and the network device may jointly encode the control information and the other data information on the downlink data channel, so that the problem in which an additional cyclic redundancy check is added when the PDCCH is separately sent is resolved. Therefore, the overheads are reduced.

For example, the uplink channel includes an uplink control channel, and the control information carried on the downlink data channel sent by the network device includes at least one of the following: transmit power control (Transmission Power Control, TPC) information of the uplink control channel, timing indication information of the uplink control channel, resource indication information of the uplink control channel, a zero power channel state information-reference signal trigger, or a first downlink assignment index (downlink assignment index, DAI), where the timing indication information of the uplink control channel is used to indicate a time interval between a time point at which the terminal device receives the downlink data channel and a time point at which the terminal device sends the uplink control channel.

For example, the uplink channel includes an uplink control channel, for example a PUCCH. After the network device sends the downlink data channel to the terminal device, the terminal device demodulates and decodes the received downlink data channel. If the decoding is correct, the terminal device sends an acknowledgement (acknowledgement, ACK) to the network device on the uplink control channel. If the decoding is incorrect, the terminal device sends a negative acknowledgement (negative acknowledgement, NACK) to the network device on the uplink control channel.

For example, the terminal device sends the uplink control channel to the network device based on the control information carried on the downlink data channel, and the control information mainly includes at least one of the following:

TCP information of the uplink control channel, where the TPC information is mainly used to indicate information about power for sending the uplink control channel by the terminal device; or
timing indication information of the uplink control channel, where the timing indication information is used to indicate a time interval between a time point at which the terminal device receives the downlink data channel and a time point at which the terminal device sends the uplink control channel, the time interval is, for example, K1 slots, and assuming that the terminal device receives the downlink data channel in an n^{th} slot, the terminal device sends the uplink control channel to the network device in an (n+K1)^{th} slot; or
resource indication information of the uplink control channel, where the resource indication information is used to indicate the terminal device to determine, in an uplink control channel resource set, a specific resource used to send the uplink control channel. For example, if there are eight resources in the uplink control channel resource set, a size of the indication information is 3 bits (bits), and different values indicate different resources in the eight resources; or
a zero power channel state information-reference signal trigger (ZP CSI-RS trigger), used to trigger a zero power channel state information-reference signal (channel state information-reference signal, CSI-RS); or
a first downlink assignment index (downlink assignment index, DAI), used to indicate a total quantity and/or an accumulated quantity of downlink data sent by the network device.

It should be noted that, in the embodiments of this application, when the uplink channel includes the uplink control channel, the control information carried on the downlink data channel includes at least one piece of the foregoing information. For example, the control information includes only the TPC information of the uplink control channel and the timing indication information of the uplink control channel. For another example, the control information includes only the resource indication information of the uplink channel. For another example, the control information includes only the ZP CSI-RS trigger. For another example, the control information includes the transmit power control information of the uplink control channel, the timing indication information of the uplink control channel, the resource indication information of the uplink control channel, the zero power channel state information-reference signal trigger, and the first downlink assignment index DAI.

In this embodiment, the network device sends the control information required by the uplink control channel to the terminal device through the downlink data channel, so that after receiving the downlink data channel, the terminal device parses out the control information from the downlink data channel and sends the uplink control channel. Sending of the uplink control channel does not depend on the PDCCH, thereby reducing the PDCCH overheads to some extent.

For example, the uplink channel includes an uplink data channel, and the control information includes at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

For example, the uplink channel includes an uplink data channel, for example, a PUSCH. After the network device sends the downlink data channel to the terminal device, the terminal device parses out, from the downlink data channel, the control information required for sending the uplink data channel, and sends the uplink data channel to the network device based on the control information. The control information mainly includes at least one of the following:
A: carrier indicator (carrier indicator) information of the uplink data channel, used to indicate a carrier number used to send the uplink data channel; or
B: bandwidth part indicator (bandwidth part indicator) information of the uplink data channel, used to indicate a bandwidth part (bandwidth part) used to send the uplink data channel, where the bandwidth part refers to a part of an entire bandwidth; or
C: frequency domain resource indication information of the uplink data channel, used to indicate a position of a frequency domain resource (frequency domain resource allocation) used to send the uplink data channel; or
D: time domain resource indication information of the uplink data channel, used to indicate a position of a time domain resource (time domain resource allocation) used to send the uplink data channel. The time domain resource indication information may indicate a time domain start symbol and a length of the uplink data channel, and further indicate a K2 indicator value and a quantity of slots within an interval between a time point at which the control information on the downlink data channel is received and a time point at which the uplink data channel is sent. For example, assuming that the terminal device receives the control information on the downlink data channel in an n^{th} slot, the terminal device sends the uplink data channel to the network device in an (n+K2)^{th} slot; or
E: a frequency-domain frequency hopping indication of the uplink data channel, used to indicate whether frequency-domain frequency hopping is required; or a modulation and coding scheme (modulation and coding scheme, MCS) of the uplink data channel, used to indicate the modulation and coding scheme used by the uplink data channel; or
F: a new data indicator (new data indicator, NDI) of the uplink data channel, used to indicate whether the uplink data channel is newly transmitted or retransmitted; or
G: a redundancy version of the uplink data channel, used to indicate a redundancy version number used by the uplink data channel; or
H: a hybrid automatic repeat request (hybrid automatic repeat request, HARQ) process number (process number) of the uplink data channel, used to indicate the process number of transmission of the uplink data channel; or
I: precoding information and a quantity of layers (precoding information and number of layers) of the uplink data channel, used to indicate the precoding information and the quantity of layers used for transmission of the uplink data channel; or
J: transmit power control information of the uplink data channel, used to indicate the power control information of the uplink data channel; or
K: antenna port (antenna port) information of the uplink data channel, used to indicate a port number used to send the uplink data channel; or
L: sounding reference signal (sounding reference signal, SRS) resource indication information, used to indicate an SRS resource; or
M: SRS request information, used to trigger sending of an SRS; or
N: a channel state information triggering request (CSI request), used to trigger measurement and reporting of channel state information (channel state information, CSI); or
O: a second downlink assignment index (downlink assignment index, DAI), used to indicate a total quantity and/or an accumulated quantity of downlink data.

It should be noted that, in the embodiments of this application, when the uplink channel includes the uplink data channel, the control information carried on the downlink data channel includes at least one of A to O in the foregoing information. For example, the control information includes only the J (the transmit power control information of the uplink data channel). For another example, the control information includes only the E (the frequency-domain frequency hopping indication of the uplink data channel). For another example, the control information includes only the K and the I (the antenna port information, the precoding information, and the quantity of layers of the uplink data channel). For another example, the control information includes the L and the M (the SRS resource indication information and the SRS request information).

In this embodiment, the network device sends the control information required by the uplink data channel to the terminal device through the downlink data channel, so that after receiving the downlink data channel, the terminal device parses out the control information from the downlink data channel and sends the uplink data channel. Sending of the uplink control channel does not depend on the PDCCH, thereby reducing the PDCCH overheads to some extent.

It should be noted that, in the foregoing embodiment, when the uplink channel includes the uplink data channel, the control information includes the SRS request information. However, this is not limited in this embodiment of this application. In another feasible implementation, when the uplink channel includes the uplink control channel, the control information may include the SRS request information. When the uplink channel includes both the uplink data channel and the uplink control channel, the control information includes one piece of SRS request information.

In addition, it should be further noted that, in the foregoing embodiment, the uplink channel may include only the uplink control channel, or the uplink channel may include only the uplink data channel, or the uplink channel includes both the uplink control channel and the uplink data channel.

When the uplink channel includes both the uplink control channel and the uplink data channel, and the control information includes at least one of the following: transmit power control information of the uplink control channel, timing indication information of the uplink control channel, resource indication information of the uplink control channel, a zero power channel state information-reference signal trigger, a first downlink assignment index DAI, carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index.

For example, when the uplink channel includes both the uplink control channel and the uplink data channel, the control information may include both the first downlink assignment index DAI and the second downlink assignment index. The first downlink assignment index and the second downlink assignment index are respectively used to indicate either of a total quantity and an accumulated quantity of downlink data. Specifically, the first downlink assignment index is used to indicate the total quantity, and the second downlink assignment index is used to indicate the accumulated quantity; or the first downlink assignment index is used to indicate the accumulated quantity, and the second downlink assignment index is used to indicate the total quantity.

For example, when the uplink channel includes both the uplink control channel and the uplink data channel, the control information may include only the first downlink assignment index or include only the second downlink assignment index.

In this embodiment of this application, when receiving the downlink data channel, the terminal device may need to use a HARQ process number of the downlink data channel. The network device may send the HARQ process number to the terminal device by using the foregoing control information, or send the HARQ process number of the downlink data channel to the terminal device by using the foregoing indication information.

In this embodiment, the control information includes the hybrid automatic repeat request HARQ process number of the downlink data channel; or the indication information includes the hybrid automatic repeat request HARQ process number of the downlink data channel. Because the process number of the downlink data channel is not limited to a fixed value, the HARQ process number of the downlink data channel can be flexibly sent to the terminal device.

The following describes in detail how the terminal device receives the downlink data channel in the foregoing embodiment.

In a feasible design, before sending, to the terminal device, the downlink data channel that carries the control information, the network device does not send a physical downlink control channel to the terminal device. Correspondingly, before sending the uplink channel to the network device based on the control information, the terminal device does not receive the downlink control channel.

In this manner, the network device does not send, to the terminal device, the PDCCH used to schedule the downlink data channel, and the terminal device receives the downlink data channel only based on the indication information sent by the network device by using the higher layer signaling. In other words, various information required by the terminal device to receive the downlink data channel is carried in the indication information, and the network device does not need to send the PDCCH to the terminal device, thereby reducing the PDCCH overheads to some extent.

When the terminal device receives the downlink data channel only based on the indication information sent by the network device by using the higher layer signaling, the indication information includes at least one of the following:
frequency domain resource indication information of the downlink data channel, used to indicate a position of a frequency domain resource (frequency domain resource allocation) on which the downlink data channel is located; or
time domain resource indication information of the downlink data channel, used to indicate a position of a time domain resource (time domain resource allocation) on which the downlink data channel is located; or
a type of a virtual resource block (virtual resource block, VRB) to physical resource block (physical resource block, PRB) mapping (VRB-to-PRB mapping) of the downlink data channel. The VRB-to-PRB mapping mainly includes two types: a centralized mapping and a distributed mapping. The VRB-to-PRB mapping is a parameter related to a frequency domain resource mapping, and is used to indicate a type of the frequency domain resource mapping of the downlink data channel; or
a physical resource block bundling size (PRB bundling size indicator) of the downlink data channel, mainly used to indicate a precoded physical resource block bundling size used by the downlink data channel, in other words, after the downlink data channel is mapped, several PRBs are jointly bundled for precoding; or a modulation and coding scheme MCS of the downlink data channel, used to indicate the modulation and coding scheme used by the downlink data channel; or
a new data indicator NDI of the downlink data channel, used to indicate whether the downlink data channel is newly transmitted or retransmitted; or
a redundancy version of the downlink data channel, used to indicate a redundancy version number used by the downlink data channel; or
initialization information of a demodulation reference signal (demodulation reference signal, DMRS) of the downlink data channel, used to indicate sequence initialization information of the DMRS used for demodulation of the downlink data channel; or
an antenna port number of the downlink data channel, used to indicate the port number used to send the downlink data channel; or
carrier indicator information of the downlink data channel, used to indicate a carrier number used to receive the downlink data channel; or
bandwidth part indicator information of the downlink data channel, used to indicate a bandwidth part used to receive the downlink data channel, where the bandwidth part refers to a part of an entire bandwidth; or
a transmission configuration indicator (transmission configuration indication, TCI) of the downlink data channel, used to indicate a quasi-co-location relationship of the downlink data channel.

It should be noted that, in this embodiment of this application, when the terminal device receives the downlink data channel only based on the indication information sent by the network device by using the higher layer signaling, the indication information includes at least one of the foregoing information. For example, the indication information includes only the frequency domain resource indication information of the downlink data channel. For another example, the indication information includes only the type of the virtual resource block to physical resource block mapping of the downlink data channel and the physical resource block bundling size of the downlink data channel. For another example, the indication information includes only the carrier indicator information of the downlink data channel.

It should be noted that, that the terminal device receives the downlink data channel only based on the indication information sent by the higher layer signaling means that all information required for receiving the downlink data channel is not carried on the PDCCH, so that the downlink data channel can be received without receiving the PDCCH.

In this embodiment, the network device sends the indication information required by the downlink data channel to the terminal device by using the higher layer signaling, so that after receiving the higher layer signaling, the terminal device parses out the indication information from the higher layer signaling and receives the downlink data channel. Receiving of the downlink data channel does not depend on the PDCCH, thereby reducing the PDCCH overheads to some extent.

In another feasible design, before the network device sends, to the terminal device, the downlink data channel that carries the control information, the terminal device receives a semi-persistent scheduling physical downlink control channel sent by the network device. In this case, that the terminal device receives, based on the indication information, the downlink data channel sent by the network device is specifically: The terminal device receives, based on the semi-persistent scheduling physical downlink control channel and the indication information, the downlink data channel sent by the network device. Correspondingly, before receiving the uplink channel sent by the terminal device based on the control information, the network device further sends the semi-persistent scheduling physical downlink control channel to the terminal device.

In this manner, the network device sends the semi-persistent scheduling physical downlink control channel to the terminal device, and sends the indication information to the terminal device by using the higher layer signaling. In this way, some information required by the terminal device to receive the downlink data channel is carried in the indication information, and the other information is carried on the semi-persistent scheduling physical downlink control channel. The PDCCH sent by the network device is the semi-persistent scheduling physical downlink control channel. After the semi-persistent scheduling PDCCH is sent only once, in a subsequent period of time, the downlink data channel may be received based on indication information of the PDCCH, and the PDCCH does not need to be received each time before the downlink data channel is received. Therefore, the PDCCH overheads are reduced to some extent.

When the terminal device receives the downlink data channel based on the semi-persistent scheduling physical downlink control channel sent by the network device and the indication information sent by the network device by using the higher layer signaling, the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel. For detailed description, refer to the foregoing description that the terminal device receives the downlink data channel only based on the indication information. Details are not described herein again.

The indication information includes at least one of the following information: a transmission periodicity of the downlink data channel, used to indicate an interval between two adjacent downlink data channel transmissions. For example, the periodicity is one slot, that is, a next downlink data channel is received after one slot after a previous downlink data channel is received; or
a quantity of hybrid automatic repeat request HARQ processes of the downlink data channel, used to indicate a process number of the current downlink data channel transmission; or
a format of a physical uplink control channel PUCCH resource corresponding to the downlink data channel, used to indicate a format of the PUCCH on which feedback information sent by the terminal device to the network device is located when the terminal device correctly or incorrectly decodes the downlink data channel.

In this embodiment, the network device sends the semi-persistent scheduling physical downlink control channel to the terminal device, and sends the indication information to the terminal device by using the higher layer signaling. After the semi-persistent scheduling PDCCH is received only once, in a subsequent period of time, the downlink data channel may be received based on the SPS PDCCH, and the PDCCH does not need to be received each time before the downlink data channel is received. Therefore, the PDCCH overheads are reduced, and PDCCH blocking that occurs when a plurality of terminal devices transmit services at a same moment is avoided. Further, the downlink data channel includes the control information, and the network device may jointly encode the control information and the other data information on the downlink data channel, so that the problem in which an additional cyclic redundancy check (cyclic redundancy check, CRC) is added when the PDCCH is separately sent is resolved. Therefore, the overheads are reduced.

It should be noted that, when the terminal device receives the downlink data channel based on the semi-persistent scheduling physical downlink control channel sent by the network device and the indication information sent by the network device by using the higher layer signaling, the semi-persistent scheduling physical downlink control channel may carry the HARQ process number of the downlink data channel. However, this is not limited in this embodiment of this application. The HARQ process number of the downlink data channel may be sent to the terminal device by using the control information or the indication information, or through the semi-persistent scheduling physical downlink control channel.

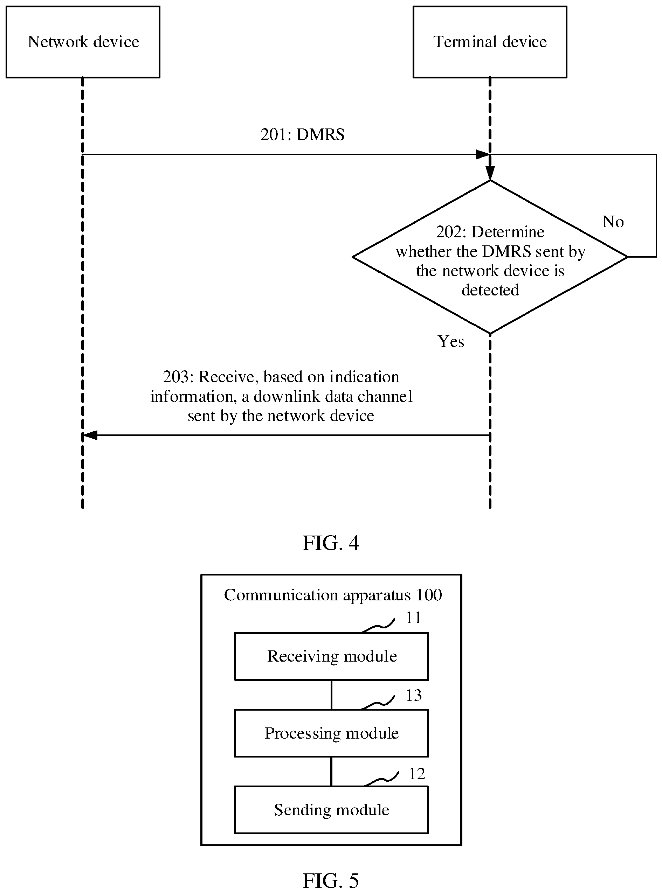

FIG. 4 is another flowchart of a communication method according to an embodiment of this application. In this embodiment, the communication method described in this application is described from a perspective of interaction between a network device and a terminal device. This embodiment includes the following steps.

201: The network device sends a demodulation reference signal DMRS to the terminal device.

Correspondingly, the terminal device receives the DMRS.

202: The terminal device determines whether the DMRS sent by the network device is detected. If the terminal device detects the DMRS, step 203 is performed. If the terminal device does not detect the DMRS, the terminal device continues to perform next DMRS blind detection.

In this embodiment, the terminal device replaces PDCCH blind detection with DMRS detection. If the DMRS is detected, step 203 is performed. Because the DMRS detection is sequence detection, compared with blind detection of existence of a PDSCH, implementation complexity of the terminal device can be reduced, and a latency can be reduced.

203: The terminal device receives, based on indication information, a downlink data channel sent by the network device.

If the terminal device detects the DMRS in step 202, the terminal device performs closed-loop service communication by using the method in this application. To be specific, the terminal device receives, based on the indication information, the downlink data channel sent by the network device, where the downlink data channel carries control information. Then, the terminal device sends an uplink channel to the network device based on the control information.

For details, refer to description of step 101 to step 103. Details are not described again.

If the terminal device does not detect the DMRS, the terminal device may assume that the network device does not send the downlink data channel, and the terminal device continues to perform next DMRS blind detection.

In this embodiment, the terminal device determines, by detecting the DMRS, whether the network device sends the downlink data channel, and receives the downlink data channel by using the indication information after determining that the network device sends the downlink data channel. Compared with direct blind detection of existence of the downlink data channel, the DMRS detection is the sequence detection, so that the implementation complexity of the terminal device can be reduced, and decoding can be performed without assuming existence of downlink data, thereby reducing the latency.

FIG. 5 is a schematic diagram of a structure of a communication apparatus according to an embodiment of this application. The communication apparatus in this embodiment may be a terminal device, or may be a chip used in a terminal device. The communication apparatus may be configured to perform a function of the terminal device in the foregoing method embodiment. As shown in FIG. 5, the communication apparatus 100 may include a receiving module 11 and a sending module 12.

The receiving module 11 is configured to: receive indication information sent by a network device by using higher layer signaling, and receive, based on the indication information, a downlink data channel sent by the network device, where the downlink data channel carries control information.

The sending module 12 is configured to send an uplink channel to the network device based on the control information received by the receiving module 11.

In a feasible design, the uplink channel includes an uplink control channel, and the control information includes at least one of the following: transmit power control information of the uplink control channel, timing indication information of the uplink control channel, resource indication information of the uplink control channel, a zero power channel state information-reference signal trigger, or a first downlink assignment index DAI, where the timing indication information is used to indicate a time interval between a time point at which the terminal device receives the downlink data channel and a time point at which the terminal device sends the uplink control channel.

In a feasible design, the uplink channel includes an uplink data channel, and the control information includes at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

In a feasible design, before the sending module 12 sends the uplink channel to the network device based on the control information, the receiving module 11 is further configured to skip receiving a physical downlink control channel.

In a feasible design, the indication information includes at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel.

In a feasible design, the receiving module 11 is configured to: receive a semi-persistent scheduling physical downlink control channel sent by the network device, and receive, based on the semi-persistent scheduling physical downlink control channel and the indication information, the downlink data channel sent by the network device.

In a feasible design, the semi-persistent scheduling physical downlink control channel carries at least one of the following information: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and
the indication information includes at least one of the following information: a transmission periodicity of the downlink data channel, a quantity of hybrid automatic repeat request HARQ processes of the downlink data channel, or a format of a physical uplink control channel PUCCH resource corresponding to the downlink data channel.

In a feasible design, the control information includes a hybrid automatic repeat request HARQ process number of the downlink data channel; or
the indication information includes a hybrid automatic repeat request HARQ process number of the downlink data channel.

Referring to FIG. 5, the communication apparatus 100 further includes:
a processing module 13, configured to: before the receiving module 11 receives, based on the indication information, the downlink data channel sent by the network device, detect a demodulation reference signal DMRS sent by the network device.

The communication apparatus provided in this embodiment of this application may perform an action of the terminal device in the foregoing method embodiment. An implementation principle and a technical effect of the communication apparatus are similar to those in the method embodiment. Details are not described herein again.

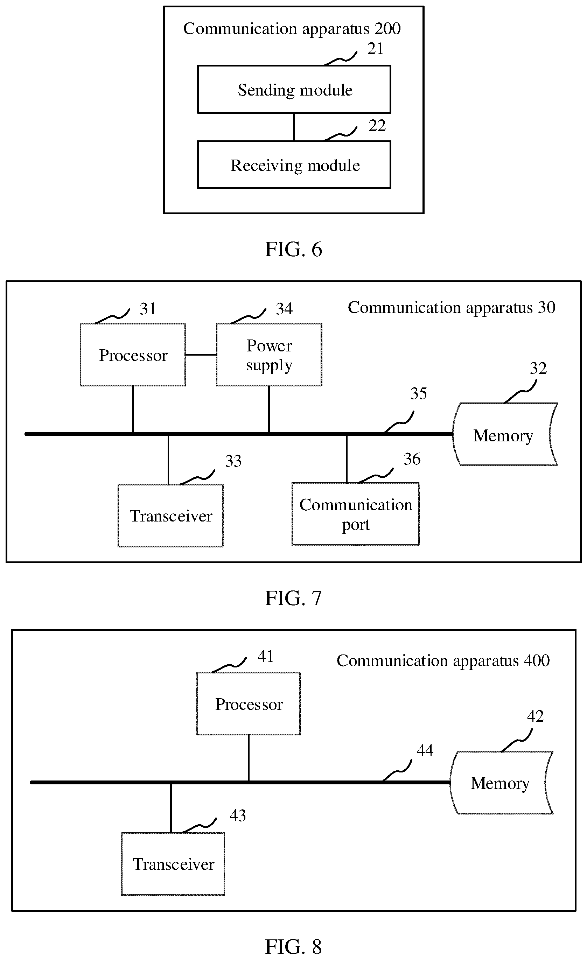

FIG. 6 is another schematic diagram of a structure of a communication apparatus according to an embodiment of this application. The communication apparatus in this embodiment may be a network device, or may be a chip used in a network device. The communication apparatus may be configured to perform a function of the network device in the foregoing method embodiment. As shown in FIG. 6, the communication apparatus 200 may include a sending module 21 and a receiving module 22.

The sending module 21 is configured to: send indication information to a terminal device by using higher layer signaling, and send, to the terminal device, a downlink data channel that carries control information.

The receiving module 22 is configured to receive an uplink channel, where the uplink channel is sent by the terminal device based on the control information carried on the downlink data channel sent by the sending module 21.

In a feasible design, the uplink channel includes an uplink control channel, and the control information includes at least one of the following: transmit power control information of the uplink control channel, timing indication information of the uplink control channel, resource indication information of the uplink control channel, a zero power channel state information-reference signal trigger, or a first downlink assignment index DAI, where the timing indication information is used to indicate a time interval between a time point at which the terminal device receives the downlink data channel and a time point at which the terminal device sends the uplink control channel.

In a feasible design, the uplink channel includes an uplink data channel, and the control information includes at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

In a feasible design, before sending, to the terminal device, the downlink data channel that carries the control information, the sending module 21 is further configured to skip sending a physical downlink control channel to the terminal device.

In a feasible design, the indication information includes at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel.

In a feasible design, before the receiving module 22 receives the uplink channel sent by the terminal device based on the control information, the sending module 21 is further configured to send a semi-persistent scheduling physical downlink control channel to the terminal device.

In a feasible design, the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and
the indication information includes at least one of the following information: a transmission periodicity of the downlink data channel, a quantity of hybrid automatic repeat request HARQ processes of the downlink data channel, or a format of a physical uplink control channel PUCCH resource corresponding to the downlink data channel.

In a feasible design, the control information includes a hybrid automatic repeat request HARQ process number of the downlink data channel; or
the indication information includes a hybrid automatic repeat request HARQ process number of the downlink data channel.

In a feasible design, before sending, to the terminal device, the downlink data channel that carries the control information, the sending module 21 is further configured to send a demodulation reference signal DMRS to the terminal device.

The communication apparatus provided in this embodiment of this application may perform an action of the network device in the foregoing method embodiment. An implementation principle and a technical effect of the communication apparatus are similar to those in the method embodiment. Details are not described herein again.

It should be noted that, it should be understood that the transceiver module may be a transceiver in an actual implementation. The processing module may be implemented in a form of software invoked by a processing element, or may be implemented in a form of hardware. For example, the processing module may be a separately disposed processing element, or may be integrated into a chip of the foregoing apparatus for implementation. In addition, the processing module may alternatively be stored in a memory of the foregoing apparatus in a form of program code, and is invoked by a processing element of the foregoing apparatus to perform a function of the processing module. In addition, all or some of the modules may be integrated together, or may be implemented independently. The processing element described herein may be an integrated circuit having a signal processing capability. In an implementation process, steps in the foregoing methods or the foregoing modules can be implemented by using a hardware integrated logical circuit in the processor element, or by using instructions in a form of software.

For example, the foregoing modules may be configured as one or more integrated circuits for implementing the foregoing method, such as one or more application-specific integrated circuits (application specific integrated circuit, ASIC), one or more microprocessors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can invoke the program code. For still another example, the modules may be integrated together and implemented in a form of a system-on-a-chip (system-on-a-chip, SOC).

FIG. 7 is a schematic diagram of a structure of a communication apparatus according to an embodiment of this application. As shown in FIG. 7, the communication apparatus 300 may include a processor 31 (for example, a CPU), a memory 32, and a transceiver 33. The transceiver 33 is coupled to the processor 31, and the processor 31 controls sending and receiving actions of the transceiver 33. The memory 32 may include a high-speed random access memory (random-access memory, RAM), and may further include a non-volatile memory (non-volatile memory, NVM), for example, at least one magnetic disk memory. The memory 32 may store various instructions, to complete various processing functions and implement the steps of the method in this application. Optionally, the communication apparatus in this application may further include a power supply 34, a communication bus 35, and a communication port 36. The transceiver 33 may be integrated into a transceiver of the communication apparatus, or may be an independent transceiver antenna on the communication apparatus. The communication bus 35 is configured to implement a communication connection between elements. The communication port 36 is configured to implement a connection and communication between the communication apparatus and another peripheral.

In this embodiment of this application, the memory 32 is configured to store computer-executable program code, and the program code includes instructions. When the processor 31 executes the instructions, the instructions enable the processor 31 of the communication apparatus to perform a processing action of the terminal device in the foregoing method embodiment, and enable the transceiver 33 to perform sending and receiving actions of the terminal device in the foregoing embodiment. Implementation principles and technical effects of the communication apparatus are similar to those in the method embodiment. Details are not described herein again.

FIG. 8 is a schematic diagram of a structure of a communication apparatus according to an embodiment of this application. As shown in FIG. 8, the communication apparatus 400 may include a processor 41 (for example, a CPU), a memory 42, and a transceiver 43. The transceiver 43 is coupled to the processor 41, and the processor 41 controls sending and receiving actions of the transceiver 43. The memory 42 may include a high-speed random access memory (random-access memory, RAM), and may further include a non-volatile memory (non-volatile memory, NVM), for example, at least one magnetic disk memory. The memory 42 may store various instructions, to complete various processing functions and implement the steps of the method in this application. Optionally, the communication apparatus in this application may further include a communication bus 44. The transceiver 43 may be integrated into a transceiver of the communication apparatus, or may be an independent transceiver antenna on the communication apparatus. The communication bus 44 is configured to implement a communication connection between elements. The communication port 46 is configured to implement connection and communication between the communication apparatus and another peripheral.

In this embodiment of this application, the memory 42 is configured to store computer-executable program code, and the program code includes instructions. When the processor 41 executes the instructions, the instructions enable the processor 41 of the communication apparatus to perform a processing action of the network device in the foregoing embodiments or optional embodiments, and enable the transceiver 43 to perform a receiving action of the network device in the foregoing method embodiment. Implementation principles and technical effects of the communication apparatus are similar to those in the method embodiment. Details are not described herein again.

In the foregoing embodiments provided in this application, the method provided in the embodiments of this application is mainly described from the perspective of interaction between the network device and the terminal device. It may be understood that, to implement the functions in the methods provided in the embodiments of this application, the network elements, such as the terminal device and the network device, include corresponding hardware structures and/or software modules for performing the functions. A person skilled in the art should easily be aware that, in combination with algorithms steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement a described function for each particular application, but it should not be considered that the implementation goes beyond the scope of this application.

In the embodiments of this application, function modules of the terminal device and the network device may be obtained through division based on the foregoing method examples. For example, each function module may be obtained through division based on each corresponding function, or two or more functions may be integrated into one processing module. The integrated module may be implemented in a form of hardware, or may be implemented in a form of a software function module. It should be noted that in the embodiments of this application, division into the modules is an example and is merely logical function division, and may be other division during actual implementations.

The term "a plurality of' in this specification refers to two or more than two. The term "and/or" in this specification describes only an association relationship for describing associated objects and represents that there may be three relationships. For example, A and/or B may represent three cases: There is only A, there are both A and B, and there is only B. In addition, the character "/" in this specification generally indicates an "or" relationship between the associated objects. In the formula, the character "/" indicates a "division" relationship between the associated objects.

It may be understood that various numbers in the embodiments of this application are merely used for differentiation for ease of description, and are not used to limit the scope of the embodiments of this application.

It may be understood that in the embodiments of this application, sequence numbers of the foregoing processes do not mean execution sequences. The execution sequences of the processes should be determined based on functions and internal logic of the processes, and should not be construed as any limitation on the implementation processes of the embodiments of this application.

It may be understood that, in the embodiments of this application, the memory may be a non-volatile memory, such as a hard disk drive (hard disk drive, HDD) or a solid-state drive (solid-state drive, SSD), or may be a volatile memory (volatile memory), such as a random access memory (random-access memory, RAM). The memory is any other medium that can be used to carry or store expected program code in a form of an instruction or a data structure and that can be accessed by a computer. However, this is not limited thereto. The memory in the embodiments of this application may alternatively be a circuit or any other apparatus that can implement a storage function, and is configured to store program instructions and/or data.

The foregoing description about implementations allows a person skilled in the art to clearly understand that, for the purpose of convenient and brief description, division into the foregoing function modules is only used as an example for description. In an actual application, the foregoing functions can be allocated to different function modules for implementation based on a requirement. In other words, an inner structure of an apparatus is divided into different function modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division. There may be another division manner in an actual implementation. For example, a plurality of units or components may be combined or may be integrated into another apparatus, or some features may be ignored or not be performed. In addition, the displayed or discussed mutual coupling or direct coupling or communication connection may be implemented by using some interfaces. The indirect coupling or communication connections between the apparatuses or units may be implemented in electronic, mechanical, or other forms.

The units described as separate components may or may not be physically separate, and components displayed as units may be one or more physical units, that is, may be located in one place, or may be distributed on a plurality of different places. Some or all of the units may be selected based on actual requirements to achieve the objectives of the solutions in the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

All or some of the methods in the embodiments of this application may be implemented by using software, hardware, firmware, or any combination thereof. When software is used to implement the methods, all or some of the methods may be implemented in a form of a computer program product. The computer program product includes one or more computer instructions. When the computer program instructions are loaded and executed on the computer, all or some of the procedures or the functions according to the embodiments of this application are generated. The computer may be a general-purpose computer, a special-purpose computer, a computer network, a network device, a terminal, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing description is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving, by a terminal device, indication information sent by a network device by using higher layer signaling;
receiving, by the terminal device based on the indication information, a downlink data channel sent by the network device, wherein the downlink data channel carries control information; and
sending, by the terminal device, an uplink channel to the network device based on the control information.

2. The method according to claim 1, wherein the uplink channel comprises an uplink control channel; the control information comprises at least one of the following: transmit power control information of the uplink control channel, timing indication information of the uplink control channel, resource indication information of the uplink control channel, a zero power channel state information-reference signal trigger, or a first downlink assignment index DAI; and the timing indication information is used to indicate a time interval between a time point at which the terminal device receives the downlink data channel and a time point at which the terminal device sends the uplink control channel.

3. The method according to claim 1 or 2, wherein the uplink channel comprises an uplink data channel, and the control information comprises at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

4. The method according to any one of claims 1 to 3, wherein before the sending, by the terminal device, an uplink channel to the network device based on the control information, the method further comprises:
skipping receiving, by the terminal device, a physical downlink control channel.

5. The method according to claim 4, wherein the indication information comprises at least one of the following:
frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and
coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel.

6. The method according to any one of claims 1 to 3, wherein before the receiving, by the terminal device based on the indication information, a downlink data channel sent by the network device, the method further comprises:
receiving, by the terminal device, a semi-persistent scheduling physical downlink control channel sent by the network device; and
the receiving, by the terminal device based on the indication information, a downlink data channel sent by the network device comprises:
receiving, by the terminal device based on the semi-persistent scheduling physical downlink control channel and the indication information, the downlink data channel sent by the network device.

7. The method according to claim 6, wherein the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and
the indication information comprises at least one of the following information: a transmission periodicity of the downlink data channel, a quantity of hybrid automatic repeat request HARQ processes of the downlink data channel, or a format of a physical uplink control channel PUCCH resource corresponding to the downlink data channel.

8. The method according to any one of claims 1 to 5, wherein
the control information comprises a hybrid automatic repeat request HARQ process number of the downlink data channel; or
the indication information comprises a hybrid automatic repeat request HARQ process number of the downlink data channel.

9. The method according to any one of claims 1 to 8, wherein before the receiving, by the terminal device based on the indication information, a downlink data channel sent by the network device, the method further comprises:
detecting, by the terminal device, a demodulation reference signal DMRS sent by the network device.

10. A communication method, comprising:
sending, by a network device, indication information to a terminal device by using higher layer signaling;
sending, by the network device to the terminal device, a downlink data channel that carries control information;
and
receiving, by the network device, an uplink channel, wherein the uplink channel is sent by the terminal device based on the control information.

11. The method according to claim 10, wherein the uplink channel comprises an uplink control channel; the control information comprises at least one of the following: transmit power control information of the uplink control channel, timing indication information of the uplink control channel, resource indication information of the uplink control channel, a zero power channel state information-reference signal trigger, or a first downlink assignment index DAI; and the timing indication information is used to indicate a time interval between a time point at which the terminal device receives the downlink data channel and a time point at which the terminal device sends the uplink control channel.

12. The method according to claim 10 or 11, wherein the uplink channel comprises an uplink data channel, and the control information comprises at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

13. The method according to any one of claims 10 to 12, wherein before the sending, by the network device to the terminal device, a downlink data channel that carries control information, the method further comprises:
skipping sending, by the network device, a physical downlink control channel to the terminal device.

14. The method according to claim 13, wherein the indication information comprises at least one of the following:
frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and
coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel.

15. The method according to any one of claims 10 to 12, wherein before the receiving, by the network device, an uplink channel sent by the terminal device based on the control information, the method further comprises:
sending, by the network device, a semi-persistent scheduling physical downlink control channel to the terminal device.

16. The method according to claim 15, wherein the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and
the indication information comprises at least one of the following information: a transmission periodicity of the downlink data channel, a quantity of hybrid automatic repeat request HARQ processes of the downlink data channel, or a format of a physical uplink control channel PUCCH resource corresponding to the downlink data channel.

17. The method according to any one of claims 10 to 13, wherein
the control information comprises a hybrid automatic repeat request HARQ process number of the downlink data channel; or
the indication information comprises a hybrid automatic repeat request HARQ process number of the downlink data channel.

18. The method according to any one of claims 10 to 17, wherein before the sending, by the network device to the terminal device, a downlink data channel that carries control information, the method further comprises:
sending, by the network device, a demodulation reference signal DMRS to the terminal device.

19. A communication apparatus, comprising:
a receiving module, configured to: receive indication information sent by a network device by using higher layer signaling, and receive, based on the indication information, a downlink data channel sent by the network device, wherein the downlink data channel carries control information; and
a sending module, configured to send an uplink channel to the network device based on the control information received by the receiving module.

20. The apparatus according to claim 19, wherein the uplink channel comprises an uplink control channel; the control information comprises at least one of the following: transmit power control information of the uplink control channel, timing indication information of the uplink control channel, resource indication information of the uplink control channel, a zero power channel state information-reference signal trigger, or a first downlink assignment index DAI; and the timing indication information is used to indicate a time interval between a time point at which a terminal device receives the downlink data channel and a time point at which the terminal device sends the uplink control channel.

21. The apparatus according to claim 19 or 20, wherein the uplink channel comprises an uplink data channel, and the control information comprises at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

22. The apparatus according to any one of claims 19 to 21, wherein
before the sending module sends the uplink channel to the network device based on the control information, the receiving module is further configured to skip receiving a physical downlink control channel.

23. The apparatus according to claim 22, wherein the indication information comprises at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel.

24. The apparatus according to any one of claims 19 to 21, wherein
the receiving module is configured to: receive a semi-persistent scheduling physical downlink control channel sent by the network device, and receive, based on the semi-persistent scheduling physical downlink control channel and the indication information, the downlink data channel sent by the network device.

25. The apparatus according to claim 24, wherein
the semi-persistent scheduling physical downlink control channel carries at least one of the following information:
frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and
coding scheme MCS of the downlink data channel, a new data indicator NDI of the downlink data channel,
initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and
the indication information comprises at least one of the following information: a transmission periodicity of the downlink data channel, a quantity of hybrid automatic repeat request HARQ processes of the downlink data channel, or a format of a physical uplink control channel PUCCH resource corresponding to the downlink data channel.

26. The apparatus according to any one of claims 19 to 23, wherein
the control information comprises a hybrid automatic repeat request HARQ process number of the downlink data channel; or
the indication information comprises a hybrid automatic repeat request HARQ process number of the downlink data channel.

27. The apparatus according to any one of claims 19 to 26, wherein the apparatus further comprises:
a processing module, configured to: before the receiving module receives, based on the indication information, the downlink data channel sent by the network device, detect a demodulation reference signal DMRS sent by the network device.

28. A communication apparatus, comprising:
a sending module, configured to: send indication information to a terminal device by using higher layer signaling, and send, to the terminal device, a downlink data channel that carries control information; and
a receiving module, configured to receive an uplink channel, wherein the uplink channel is sent by the terminal device based on the control information carried on the downlink data channel sent by the sending module.

29. The apparatus according to claim 28, wherein the uplink channel comprises an uplink control channel; the control information comprises at least one of the following: transmit power control information of the uplink control channel, timing indication information of the uplink control channel, resource indication information of the uplink control channel, a zero power channel state information-reference signal trigger, or a first downlink assignment index DAI; and the timing indication information is used to indicate a time interval between a time point at which the terminal device receives the downlink data channel and a time point at which the terminal device sends the uplink control channel.

30. The apparatus according to claim 28 or 29, wherein the uplink channel comprises an uplink data channel, and the control information comprises at least one of the following: carrier indicator information of the uplink data channel, bandwidth part indicator information of the uplink data channel, frequency domain resource indication information of the uplink data channel, time domain resource indication information of the uplink data channel, a frequency-domain frequency hopping indication of the uplink data channel, a modulation and coding scheme MCS of the uplink data channel, a new data indicator NDI of the uplink data channel, a redundancy version of the uplink data channel, a hybrid automatic repeat request HARQ process number of the uplink data channel, precoding information and a quantity of layers of the uplink data channel, transmit power control information of the uplink data channel, antenna port information of the uplink data channel, sounding reference signal SRS resource indication information, SRS request information, a channel state measurement information triggering request, or a second downlink assignment index DAI.

31. The apparatus according to any one of claims 28 to 30, wherein
before sending, to the terminal device, the downlink data channel that carries the control information, the sending module is further configured to skip sending a physical downlink control channel to the terminal device.

32. The apparatus according to claim 31, wherein the indication information comprises at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, a redundancy version of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel.

33. The apparatus according to any one of claims 28 to 30, wherein
before the receiving module receives the uplink channel sent by the terminal device based on the control information, the sending module is further configured to send a semi-persistent scheduling physical downlink control channel to the terminal device.

34. The apparatus according to claim 33, wherein the semi-persistent scheduling physical downlink control channel carries at least one of the following: frequency domain resource indication information of the downlink data channel, time domain resource indication information of the downlink data channel, a type of a virtual resource block-to-physical resource block mapping of the downlink data channel, a physical resource block bundling size of the downlink data channel, a modulation and coding scheme MCS of the downlink data channel, a new data indicator NDI of the downlink data channel, initialization information of a demodulation reference signal of the downlink data channel, an antenna port number of the downlink data channel, carrier indicator information of the downlink data channel, bandwidth part indicator information of the downlink data channel, or a transmission configuration indicator of the downlink data channel; and
the indication information comprises at least one of the following information: a transmission periodicity of the downlink data channel, a quantity of hybrid automatic repeat request HARQ processes of the downlink data channel, or a format of a physical uplink control channel PUCCH resource corresponding to the downlink data channel.

35. The apparatus according to any one of claims 28 to 31, wherein
the control information comprises a hybrid automatic repeat request HARQ process number of the downlink data channel; or
the indication information comprises a hybrid automatic repeat request HARQ process number of the downlink data channel.

36. The apparatus according to any one of claims 28 to 35, wherein
before sending, to the terminal device, the downlink data channel that carries the control information, the sending module is further configured to send a demodulation reference signal DMRS to the terminal device.

37. A computer-readable storage medium, configured to store a computer program or instructions, wherein when the computer program is or the instructions are run on a terminal device, the terminal device is enabled to perform the method according to any one of claims 1 to 9.

38. A computer-readable storage medium, configured to store a computer program or instructions, wherein when the computer program is or the instructions are run on a network device, the network device is enabled to perform the method according to any one of claims 10 to 18.

39. A computer program product, wherein when the computer program product runs on a terminal device, the terminal device is enabled to perform the method according to any one of claims 1 to 9.

40. A computer program product, wherein when the computer program product runs on a network device, the network device is enabled to perform the method according to any one of claims 10 to 18.

41. A communication apparatus, comprising a processor and a communication interface, wherein the communication interface is configured to receive a signal from a communication apparatus other than the communication apparatus and transmit the signal to the processor, or send a signal from the processor to a communication apparatus other than the communication apparatus; and the processor is configured to implement the method according to any one of claims 1 to 9 or claims 10 to 18 by using a logic circuit or executing code instructions.
